# EUROPÄISCHE PATENTSCHRIFT

(11) **EP 2 639 529 B1**
(45) Veröffentlichungstag und Bekanntmachung des Hinweises auf die Patenterteilung: **15.01.2014**
(21) Anmeldenummer: 13000355.1
(22) Anmeldetag: 24.01.2013
(51) Int. Cl.: F24J 3/08, E21B 36/00

(54) **Förderverrohrung zur Verwendung bei einer Erdwärmesonde zur Gewinnung geothermischer Energie und Verfahren zum Einbau einer solchen Förderverrohrung**
Extraction pipe installation for use in a geothermal probe for extracting geothermal energy and method for installing such an extraction pipe
Tuyauterie de transport destinée à être utilisée par une sonde d'énergie géothermique afin d'obtenir une énergie géothermique et procédé de montage d'une telle tuyauterie de transport

(30) Priorität: 15.03.2012 DE 102012005048
(43) Veröffentlichungstag der Anmeldung: 18.09.2013
(73) Patentinhaber: Daldrup & Söhne AG, 82031 Grünwald (DE)
(72) Erfinder: Tönies, Andreas, 59387 Ascheberg (DE)
(74) Vertreter: Von Rohr

(56) Entgegenhaltungen:
- EP-A2- 2 136 157
- EP-A2- 2 246 647
- DE-A1- 19 727 493
- DE-A1-102009 040 476
- DE-U1-202007 017 371
- US-B1- 6 615 601

## Beschreibung

Die Erfindung betrifft eine Förderverrohrung zur Verwendung bei einer Erdwärmesonde zur Gewinnung geothermischer Energie sowie ein Verfahren zum Einbau einer solchen Förderverrohrung.

Erdwärmesonden, die auch als "Tiefe Erdwärmesonden" bezeichnet werden, dienen zur Gewinnung von geothermischer Energie aus größeren Teufen. Diese Technologie wird insbesondere in Regionen eingesetzt, in denen der geologische Aufbau des Untergrundes weitgehend aus unpermeablen Schichtenfolgen besteht.

Eine Erdwärmesonde ist ein geschlossenes System. Sie besteht in der Regel aus einer mehrere tausend Meter tiefen Bohrung, bei der eine äußere Bohrlochverrohrung und eine innere Förderrohrverrohrung eine koaxiale Rohrkonstruktion bilden, in der ein Fluid, in der Regel Wasser, zirkuliert, siehe EP-A-2136157, EP-A-2246647 und US-A-6615601. Das Funktionsprinzip einer Erdwärmesonde beruht auf dem konvektiven Wärmetransport. Ist die Temperatur des umgebenden Gesteins größer als die Bohrlochtemperatur, wird das Transportfluid durch die Wandung der äußeren Bohrlochverrohrung im Ringraum zwischen der äußeren Bohrlochverrohrung und der Förderverrohrung erwärmt. Je tiefer die Bohrung ist, desto größer ist die Temperaturerhöhung des Wassers. So erhöht sich seine Temperatur innerhalb der Bohrung auf dem Weg in die Tiefe. Am tiefsten Punkt der Bohrung strömt das erhitzte Wasser in die Förderverrohrung nach oben, wobei sich die Fließrichtung dann umkehrt. Aufgrund des Dichteunterschiedes steigt das erhitzte Wasser durch die Förderverrohrung bis an die Oberfläche. Über einen Wärmetauscher der Erdwärmesonde oder eine Wärmepumpe wird dem erhitzten Wasser Wärmeenergie entzogen, die anschließend weiter verwendet wird. Nachdem dem Wasser die Wärmeenergie entzogen worden ist, wird es wieder dem Ringraum zwischen dem Bohrlochverrohrung und der Förderverrohrung zugeführt, wodurch sich die Kreislaufführung des Wassers ergibt.

Aus dem Stand der Technik ist es bekannt, in Erdwärmesonden eine Förderverrohrung aus GFK-Doppelwandelementen einzusetzen. Diese Rohrelemente sind dreischichtig aufgebaut. Sie weisen eine äußere Glasfiberhülle, einen luftgefüllten Zwischenraum und eine innere Fiberglashülle auf. Verbunden werden die einzelnen Rohrstücke, die es in verschiedenen Längen bis zu 12 m gibt, durch Schraubverbindungen die über an den Rohrstücken vorgesehenen Zapfengewinden und entsprechende Muffen realisiert worden. In der Praxis hat sich im Zusammenhang mit den GFK-Rohren herausgestellt, dass bei sehr langen Förderverrohrungen die GFK-Sondenrohrtechnologie den Belastungen vor Ort nicht gewachsen ist. Durch die Druck- und Zugbelastungen während der Ein- bzw. Ausbauvorgänge kann es zum Materialversagen kommen, nämlich einerseits zu Verbindeabrissen und andererseits zu Undichtigkeiten in der Förderverrohrung.

Aufgabe der vorliegenden Erfindung ist es nun, eine Förderverrohrung zur Verwendung bei einer Erdwärmesonde zur Gewinnung geothermischer Energie zur Verfügung zu stellen, die einerseits gut ein- und ausgebaut werden kann und im Übrigen auch bei sehr tiefen Bohrungen den bestehenden Belastungen standhält.

Die folgende Aufgabe ist erfindungsgemäß im wesentlichen dadurch gelöst, dass als Förderverrohrung eine Kompositverrohrung mit einem inneren Verrohrungsbereich aus einem wärmedämmenden Kunststoff, insbesondere Polypropylen oder einem Polypropylen enthaltenden Kunststoff, und einem äußeren Verrohrungsbereich aus Metall, insbesondere Stahl, vorgesehen ist.

Im Zusammenhang mit der vorliegenden Erfindung ist erkannt worden, dass eine Kompositverrohrung aus einem inneren Kunststoffinnenrohr und einem anliegenden, äußeren metallischen Außenrohr auch bei sehr tiefen Bohrungen den auftretenden statischen und dynamischen Belastungen vor Ort standhält und im Übrigen eine optimale Energiebilanz gewährleistet. Dies gilt insbesondere dann, wenn der Kunststoff aus Polypropylen (PP) oder einem Polypropylen enthaltenden Kunststoff besteht und es sich bei dem Metall des äußeren Verrohrungsbereichs um Stahl handelt. Die Polypropylen-Komponente besitzt einen sehr niedrigen Wärmedurchgangskoeffizienten und sorgt damit für eine optimale Wärmedämmung. Allerdings haben PP-Rohre nur eine sehr geringe Steifigkeit und im Übrigen eine sehr geringe Dichte, so dass PP-Rohre bzw. ein daraus hergestellter Rohrstrang bzw. ein innerer Verrohrungsbereich als solcher den Belastungen im Bohrloch nicht hinreichend standhalten würde. Dem trägt der äußere Metall-, insbesondere Stahl-Verrohrungsbereich Rechnung, der das für eine lange Rohrstrecke nötige Gewicht erzeugt und im Übrigen die mechanische Steifigkeit der Baueinheit insgesamt gewährleistet.

Bei einer besonders bevorzugten Ausführungsform der vorliegenden Erfindung ist der innere Verrohrungsbereich als Innenrohr und der äußere Verrohrungsbereich als vom Innenrohr separates Außenrohr ausgebildet. Bei den beiden Verrohrungen handelt es sich also um voneinander separate Verrohrungen.

Dabei ist bevorzugt vorgesehen, dass das Innenrohr eine Vielzahl von miteinander verschweißten Innenrohrstücken aufweist, die den Innenrohrstrang bilden, während das Außenrohr eine Vielzahl von miteinander verschraubten Außenrohrstücken aufweist, die den Außenrohrstrang bilden. Es ist festgestellt worden, dass es sich bezüglich des Innenrohrs anbietet, die einzelnen Innenrohrstücke insbesondere durch Stumpfschweißnähte miteinander zu verbinden, für die die mechanischen Zugkräfte kein Problem darstellen. Zudem hat diese Verbindungsart beispielsweise gegenüber Gewindeverbindern den Vorteil der geringeren Innenkaliberverringerung und besitzt dadurch wesentlich bessere strömungstechnische Eigenschaften. Demgegenüber werden die einzelnen Außenrohrstücke miteinander verschraubt, was sich als beste Verbindungstechnik bei metallischen Rohrstücken erwiesen hat.

Im Zusammenhang mit dem erfindungsgemäßen Kompositrohr ist festgestellt worden, dass die Materialkombination des Kunststoffinnenrohrs und des metallischen Außenrohrs grundsätzlich nicht unproblematisch ist, da die genannten Materialien ein unterschiedliches thermisches Ausdehnungsverhalten haben. Darüberhinaus hat Kunststoff häufig, dies gilt insbesondere auch für Polypropylen, eine Dichte kleiner 1, was bedeutet, dass die Innenverrohrung an sich die Tendenz hat, im Bohrloch aufzusteigen. In diesem Zusammenhang ist erfindungsgemäß vorgesehen, dass das Innenrohr im Bereich des Endes der Förderverrohrung fest mit dem Außenrohr verbunden ist. Durch die feste Verbindung des Innenrohrs mit dem Außenrohr im Bereich des Endes der Förderverrohrung werden zum einen Ausknickungen im Innenrohrstrang, die sich aufgrund des Auftriebs und der thermischen Ausdehnung des Innenrohres ergeben können, vermieden. Auftretende Kräfte werden auf diese Weise vollständig in das metallische Außenrohr eingeleitet, das entsprechend ausgelegt ist, um diese Kräfte aufzunehmen.

Bevorzugt erfolgt die Verbindung des Innenrohrs mit dem Außenrohr über einen am Ende des Außenrohrs verdickten und/oder endseitig gerundeten Rohrschuh, der letztlich das untere Ende der Förderverrohrung darstellt. Die Verdickung und/oder endseitige Rundung des Rohrschuhs liegt insbesondere deshalb vor, da im Bereich des Rohrschuhs aufgrund der Strömungsumkehr des zirkulierenden Wassers ein erhöhter Verschleiß auftritt. Die Verbindung des Außenrohrs mit dem Innenrohr über den Rohrschuh erfolgt konkret über ein Adapterstück, das einerseits mit dem Rohrschuh, insbesondere abdichtend, verschraubt ist und das andererseits mit dem untersten Innenrohrstück verschweißt ist. Hierzu weist das Adapterstück bevorzugt ein mit dem angrenzenden Innenrohrstück verbundenes Endstück aus Kunststoff, insbesondere Polypropylen oder einen Polypropylen enthaltenen Kunststoff, und ein Schraubanschlussstück aus Metall auf, wobei das Schraubanschlussstück ein Gewinde zur Verschraubung mit dem Rohrschuh und einen Eingriffsbereich zum Eingriff in das Endstück aufweist. Letztlich stellt das Adapterstück die Verbindung zwischen dem metallischen Außenrohr durch eine metallische Gewindeverbindung und dem Kunststoff-Innenrohr durch ein Kunststoff-Endstück dar.

Im Zusammenhang mit dem Zustandekommen der vorliegenden Erfindung ist im Übrigen erkannt worden, dass es sich bei einer Erdwärmesonde nach vollständigem Einbau nicht um ein statisches System handelt. Es können Temperaturänderungen des Wassers auftreten, die aufgrund der unterschiedlichen Wärmeausdehnungskoeffizienten zu Relativbewegungen der Innenverrohrung gegenüber der Außenverrohrung führen. Dies kann zu Problemen und insbesondere zu Ausknickungen in der Innenverrohrung führen. In diesem Zusammenhang ist es von Vorteil, dass in einem Abstand von wenigstens 10 m oberhalb des Rohrschuhs wenigstens eine zwischen dem Innenrohr und dem Außenrohr vorgesehene Lastaufnahmeeinrichtung zur Ableitung von Kräften des Innenrohrs in das Außenrohr vorgesehen ist. Bevorzugt sind dabei über die Länge der Förderverrohrung eine Mehrzahl von, insbesondere in regelmäßigen Abständen zwischen 100 bis 400 m beabstandete Lastaufnahmeeinrichtungen vorgesehen. Durch die Realisierung der Lastaufnahmeeinrichtungen über die Länge der Förderverrohrung ist sichergestellt, dass eine Kraftentlastung der Innenverrohrung an vorgegebenen, definierten Stellen bei gleichzeitiger Aufrechterhaltung eines lückenlos durchgehenden Innenrohrstrangs erreicht wird. Der Abstand benachbarter Lastaufnahmeeinrichtungen ist unter Berücksichtigung von Sicherheitsfaktoren, der Materialwahl insbesondere der Innenverrohrung aber auch der Außenverrohrung und der damit zusammenhängenden Wärmeausdehnungskoeffizienten sowie der maximal auftretenden Temperaturen und Temperaturschwankungen so auszulegen, dass bedingt durch die möglicherweise auftretende maximale Ausdehnung der Innenverrohrung dennoch ein integeres Verhalten des Innenrohrkörpers gewährleistet wird. Bei einer Stahl-Außenrohr- und Polypropylen-Innenrohr-Förderverrohrung liegt der Abstand benachbarter Lastaufnahmeeinrichtungen bevorzugt im Bereich zwischen 200 und 300 m. Da auch die Verbindung des Innenrohrs mit dem Außenrohr am Förderrohrende über den Rohrschuh eine Art Lastaufnahmeeinrichtung darstellt, bedeutet dies, dass der Abstand des Rohrschuhs zur ersten Lastaufnahmeeinrichtung letztlich dem vorgenannten Abstand entspricht.

Bei einer bevorzugten Ausgestaltung der Lastaufnahmeeinrichtung ist vorgesehen, dass diese einen Außenrohrverbinder und einen Innenrohrverbinder aufweist. Der Außenrohrverbinder ist mit benachbarten Außenrohrstücken zu verbinden, insbesondere zu verschrauben. Demgegenüber ist der Innenrohrverbinder mit benachbarten Innenrohrstücken zu verbinden, insbesondere zu verschweißen. Damit es zur Übertragung der Kräfte des Innenrohrstrangs auf den Außenrohrstrang kommt, weist der Außenrohrverbinder wenigstens einen innenliegenden Anschlag, der bevorzugt im Bereich einer Innennut des Außenrohrverbinders vorgesehen ist, auf. Demgegenüber weist der Innenrohrverbinder wenigstens einen zum innenliegenden Anschlag komplementären außenliegenden Anschlag auf, der bevorzugt als ringförmiger, umlaufender Vorsprung ausgebildet ist. Letztlich erfolgt die Lastaufnahme durch sich in radialer Richtung erstreckende Anschlagflächen, die einen Formschluss zwischen den beiden Rohrsträngen in axialer Richtung zur Verfügung stellen.

In diesem Zusammenhang ist es günstig, wenn der umlaufende Vorsprung an einem mit benachbarten Innenrohrstücken verbindbaren, verdickten Absetzstück vorgesehen ist bzw. hierdurch gebildet wird. Durch diese Ausgestaltung können für die erfindungsgemäße Innenverrohrung Standard-Kunststoffrohre verwendet werden, wobei lediglich in bestimmten vorgegebenen Abständen die verdickten Absetzstücke als Sonderbauteile zur Verfügung gestellt werden müssen.

Um den Einbau bzw. die Kopplung des Innenrohrs mit dem Außenrohr während des Einbaus im Bereich der Lastaufnahmeeinrichtung zu erleichtern, ist die axiale Länge der Innennut größer als die axiale Länge des Vorsprungs. Auf diese Weise kann gewährleistet werden, dass der Vorsprung der Innenverrohrung stets in der Nut aufgenommen werden kann. Zum Ausgleich des verbleibenden Ringraums zwischen dem Vorsprung und der Nut in axialer Richtung dient eine Distanzhülse. Diese besteht vorzugsweise aus Metall, insbesondere Stahl. Die Distanzhülse wird dabei während des Einbaus an die axiale Länge des Ringraum angepasst, so dass sich in axialer Richtung zumindest im wesentlichen ein Formschluß ergibt.

Um das Einsetzen des Vorsprungs in die Nut zu erleichtern, weist der Außenrohrverbinder wenigstens zwei miteinander verbindbare, insbesondere verschraubbare Lastaufnahmesegmente auf. Im unverschraubten Zustand sind die Lastaufnahmesegmente derart ausgebildet, dass über jedes Lastaufnahmesegment die Nut zugänglich ist. Auf diese Weise kann gewährleistet werden, dass die Distanzhülse und der Vorsprung, oder auch in umgekehrter Reihenfolge, in die Nut des einen Lastaufnahmesegments eingebracht werden können, wobei anschließend das andere Lastaufnahmesegment aufgeschraubt wird.

Da es sich bei der Außenverrohrung und der Innenverrohrung um an sich von einander unabhängige Verrohrungen handelt, die lediglich an einigen wenigen Stellen, nämlich im Bereich des Rohrschuhs sowie der Lastaufnahmeeinrichtungen, miteinander kraft- und/oder formschlüssig verbunden sind und sich von daher im übrigen ein Ringraum zwischen diesen Verrohrungen befindet, kann es aufgrund des sich in diesem Ringraum befindenden Mediums dazu kommen, dass Kräfte in radialer Richtung auf das Innenrohr ausgeübt werden. Um eine derartige Belastung des Innenrohrs zu vermeiden, ist im Mantel des Außenrohrs wenigstens eine Entlastungsbohrung vorgesehen. Diese befindet sich bevorzugt deshalb im Bereich des Außenrohrverbinders, da es sich bei der Außenverrohrung bzw. den dabei verwendeten Rohrstücken um Standardbauteile handelt, die an sich keiner weiteren Bearbeitung bedürfen. Demgegenüber handelt es sich bei dem Außenrohrverbinder um ein Sonderbauteil, das gesondert herzustellen ist. Dabei kann die wenigstens eine Entlastungsbohrung ohne weiteres vorgesehen werden.

Im Ergebnis wird durch die Erfindung eine Förderverrohrung zur Verfügung gestellt, die sich durch eine Vielzahl von Vorteilen auszeichnet, nämlich
- einen geringen Wärmeleitwert,
- eine hohe statische und dynamische Stabilität,
- eine robuste Verbindungstechnik,
- dichte Verbindungen der Einzelrohrstücke,
- eine geringe Oberflächenrauigkeit, geringer Strömungswiderstand,
- eine gute Temperaturbeständigkeit,
- eine hohe Korrosionsbeständigkeit,
- Wartungsfreiheit,
- ein leichtes Handling und
- eine wirtschaftliche Montage.

Das erfindungsgemäße Verfahren zum Einbau einer Förderverrohrung in eine Außenverrohrung einer Verrohrung zur Verwendung bei einer Erdwärmesonde zur Gewinnung geothermische Energie sieht unter Verwendung einer Förderverrohrung der vorgenannten Art so aus, dass benachbarte Innenrohrstücke des Innenrohres über eine Schweißverbindung, insbesondere über Stumpfschweißverbindungen, miteinander verbunden werden, während benachbarte Außenrohrstücke der Außenverrohrung miteinander verschraubt werden. Für die beiden Rohrtypen werden also unterschiedliche Verbindungstechniken verwendet.

Im Hinblick auf die erfindungsgemäße Kompositverrohrung mit an sich zwei unabhängigen Rohrsträngen ist erfindungsgemäß festgestellt worden, dass es am günstigsten ist, das Außenrohr und das Innenrohr mit gleichem Baufortschritt zu montieren. Da die Innenrohrstücke der Innenverrohrung verschweißt, insbesondere stumpfverschweißt werden, während die Außenrohrstücke der Außenverrohrung verschraubt werden, ist, um einen gleichzeitigen Baufortschritt zu gewährleisten, eine spezielle Einbautechnik erforderlich. Bei einer bevorzugten Ausführungsform wird das zu verbauende Innenrohrstück in das zu verbauende Außenrohrstück eingebracht, so dass sich ein Rohrstückelement, also ein Kompositrohrelement, ergibt. Dabei ist es dann bevorzugt so, dass das Innenrohrstück so im Außenrohrstück fixiert wird, dass sich am unteren Ende des Elements ein Überstand des Innenrohrstücks ergibt. Dieses Element wird nun vertikal auf das zuletzt verbaute Rohrstückelement aufgesetzt. Die aneinander zugewandten Enden der Innenrohrstücke werden nun miteinander verschweißt. Anschließend wird das Außenrohrstück abgesenkt und mit seinem Gegenstück kraftschlüssig verschraubt. Der nunmehr verlängerte Strang wird weiter in das Bohrloch herabgelassen, bis sein oberes Ende am Bohrlochkopf steht und dort abgefangen wird. Dieser Verbindungsvorgang wiederholt sich, bis die Förderverrohrung vollständig eingebaut ist. Dabei ist natürlich zu berücksichtigen, dass in vorgegebenen Abständen jeweils eine Lastaufnahmeeinrichtung eingebaut wird.

Weitere Merkmale, Vorteile und Anwendungsmöglichkeiten ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbezügen.

Es zeigt
- Fig. 1: eine schematische Darstellung einer Erdwärmesonde mit einer erfindungsgemäßen Förderverrohrung,
- Fig. 2: eine schematischen Schnittansicht des unteren Endes einer Förderverrohrung,
- Fig. 3: eine schematische Schnittansicht eines Teil einer erfindungsgemäßen Förderverrohrung mit einer Lastaufnahmeeinrichtung,
- Fig. 4: eine Querschnittsansicht eines Lastaufnahmesegments und
- Fig. 5: eine Querschnittsansicht einer Distanzhülse.

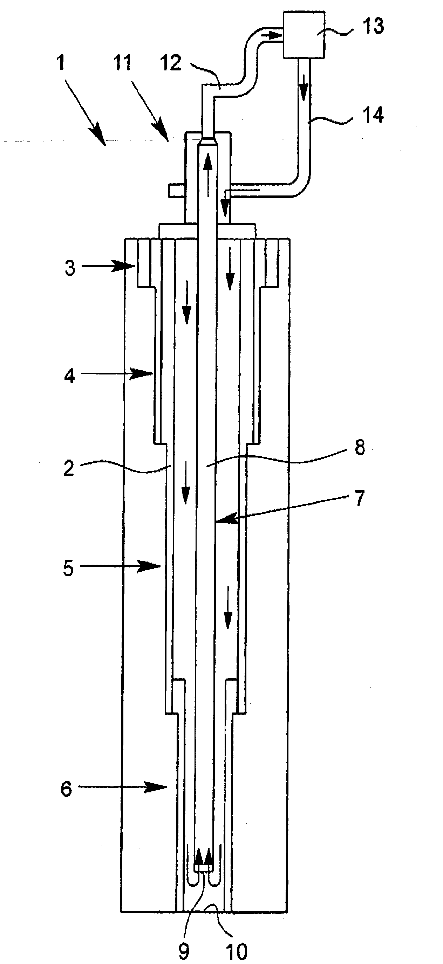

In Fig. 1 ist eine tiefe Erdwärmesonde, die nachfolgend nur als Erdwärmesonde 1 bezeichnet wird, dargestellt. Die Erdwärmesonde 1 weist eine äußere Bohrlochverrohrung 2 auf, die aus mehreren Abschnitten besteht. Dabei wird der Durchmesser der äußeren Bohrlochverrohrung 2 von oben nach unten hin in Stufen kleiner. In einem ersten Bereich 3, der sich bis zu 40 m erstrecken kann, befindet sich ein Standrohr. An den ersten Bereich kann sich ein zweiter Bereich 4 und daran ein dritter Bereich 5 anschließen. Der dritte Bereich 5 weist letztlich einen geringeren äußeren Bohrdurchmesser als der zweite Bereich 4 auf. Der zweite Bereich 4 kann sich, gemessen von der Oberfläche, bis über eine Strecke zwischen 100 und 200 m erstrecken, während sich der dritte Bereich 5 über eine Strecke, gemessen von der Oberfläche, bis zu 2.000 m erstrecken kann. Ein vierter Bereich 6 erstreckt sich vorliegend über eine Strecke - gemessen von einer Oberfläche - auf fast ca. 3.000 m. Die vorgenannten Längenangaben der einzelnen Bereiche sind jedoch nicht abschließend. Grundsätzlich ist es ohne weiteres möglich, dass die einzelnen Abschnitte eine größere oder kleinere Länge haben. Insbesondere kann aber der vierte Bereich 6 eine noch größere Länge als zuvor angegeben aufweisen. Das Bohrloch selbst ist verrohrt, wobei der Ringraum zum Gebirge hin zementiert ist. Der Bohrlochverlauf ist vertikal, wobei jedoch auch abgeschrägte Verläufe möglich sind.

Für die vorliegende Erfindung ist jedoch die Art und der Aufbau der äußeren Bohrlochverrohrung 2 nicht relevant. Auch andere Ausführungsformen einer äußeren Bohrlochverrohrung 2 sind ohne weiteres möglich.

Innerhalb der äußeren Bohrlochverrohrung 2 befindet sich eine Förderverrohrung 7. Die Förderverrohrung 7 weist an ihrem unteren Ende ein nach unten hin offenes Förderrohr 8 auf, dessen Ende 9 in einigem Abstand von der Bohrlochsohle 10 im Bohrloch angeordnet ist. Der Abstand liegt in der Regel zwischen 5 und 50 m, bevorzugt bei etwa 20 m.

Sowohl die äußere Bohrlochverrohrung 2 als auch die Förderverrohrung 7 enden in einem Sondenkopf 11. Die Förderverrohrung 7 geht dabei in eine Warmförderleitung 12 über, die mit einer Wärmetauscheinrichtung 13 gekoppelt ist. Bei der Warmetauscheinrichtung 13 kann es sich beispielsweise um einen Wärmetauscher oder eine Wärmepumpe handeln. Aus der Wärmetauscheinrichtung 13 führt eine Kaltförderleitung 14 heraus, die in die Bohrlochverrohrung 2 bzw. den Ringraum zwischen der Bohrlochverrohrung 2 und der Förderverrohrung 7 mündet.

Wie sich auch der schematischen Darstellung gemäß Fig. 1 ergibt, ist die Erdwärmesonde 1 ein geschlossenes System, in dem ein Fluid, im vorliegenden Fall Wasser, zirkuliert. Wasser tritt über die Kaltförderleitung 14 in den Ringraum zwischen der Bohrlochverrohrung 2 und der Förderverrohrung 7 ein. Auf dem Weg zum Bohrlochtiefsten heizt sich das Wasser geothermisch auf. Während sich das Wasser im Ringraum nach unten bewegt, was durch Pfeile angezeigt ist, kehrt es im Bereich des Bohrlochtiefsten seine Förderrichtung um und tritt in die Förderverrohrung 7 ein. Das erhitzte Wasser steigt aufgrund des Dichteunterschiedes in der Förderverrohrung 7 auf, wobei eine Pumpe zur Gewährleistung der Förderrichtung und/oder Erhöhung der Umlaufgeschwindigkeit in der Regel nicht erforderlich ist. Im Bereich des Sondenkopfs 11 gefangt das Wasser aus der Förderverrohrung 7 in die Warmförderleitung 12 und von dort in die Wärmetauscheinrichtung 13, wo Wärmeenergie dem Wasser entzogen wird. Die entzogene Wärmeenergie wird dann abgeführt und/oder beispielsweise in elektrische Energie umgewandelt. Das anschließend abgekühlte Wasser wird nach der Wärmetauscheinrichtung 13 über die Kaltförderleitung 14 wieder dem Ringraum der Bohrlochverrohrung 2 zugeführt.

Wesentlich ist nun, dass als Förderverrohrung 7 bzw. als Förderrohr 8 eine sogenannte Kompositverrohrung aus zwei unterschiedlichen Materialien vorgesehen ist. Dabei ist ein innerer Verrohrungsbereich aus einem wärmedämmenden Kunststoff vorgesehen, während weiterhin ein äußerer Verrohrungsbereich aus Metall vorgesehen ist. Der innere Verrohrungsbereich ist dabei im bzw. innerhalb des äußeren Verrohrungsbereichs angeordnet. Bei dem wärmedämmenden Kunststoff handelt es sich vorzugsweise um Polypropylen oder einen anderen Polypropylen enthaltenden Kunststoff. Der äußere Verrohrungsbereich besteht bevorzugt aus Stahl.

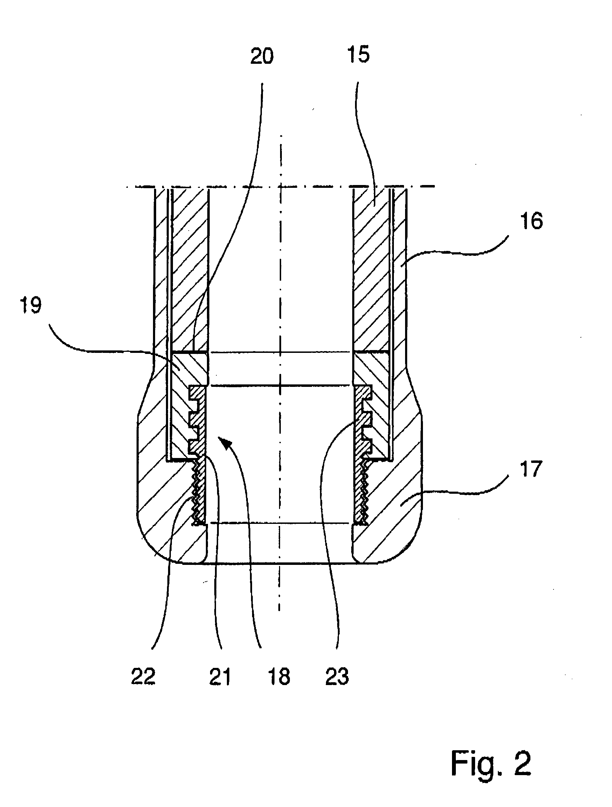

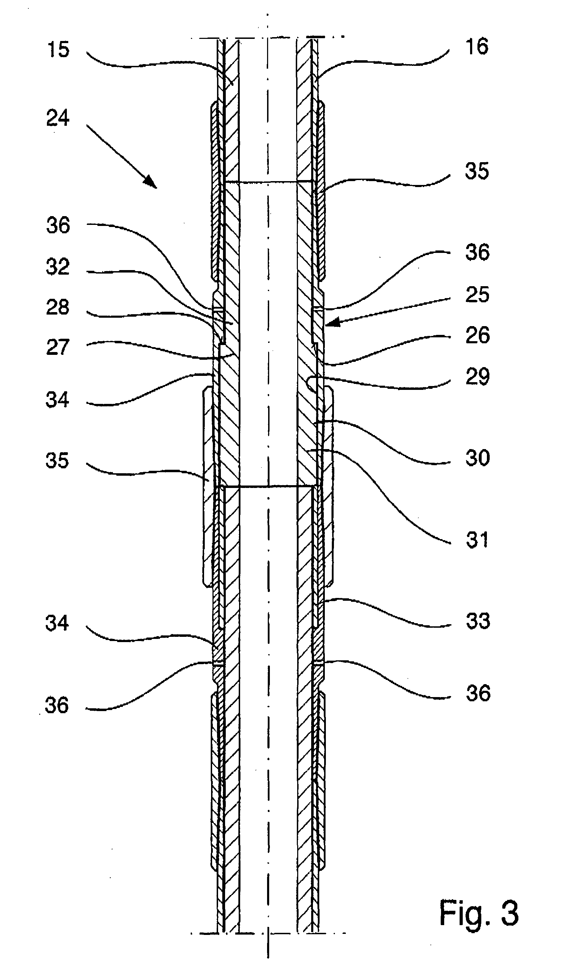

In den Fig. 2 und 3 ist erkennbar, dass der innere Verrohrungsbereich als Innenrohr 15 ausgebildet ist, während der äußere Verrohrungsbereich als ein vom Innenrohr separates Außenrohr 16 ausgebildet ist. Das Innenrohr 15 befindet sich innerhalb des Außenrohrs 16, wobei die äußere Oberfläche des Innenrohrs 15 von der Innenoberfläche des Außenrohrs 16 nur gering beabstandet ist, also nur ein vergleichsweise kleiner Ringraum zwischen den beiden Rohren 15, 16 bzw. Rohrsträngen vorgesehen ist. Das Innenrohr 15 wird dabei durch eine Vielzahl von miteinander verschweißten Innenrohrstücken, die im einzelnen nicht bezeichnet sind, gebildet bzw. weist diese auf, während das Außenrohr 16 durch eine Vielzahl von miteinander verschraubten Außenrohrstücken gebildet wird bzw. diese aufweist. Letztlich kann die Förderverrohrung 7 damit auf eine Länge von mehreren tausend Metern verlängert werden.

Wie sich aus Fig. 2 ergibt, ist das Innenrohr 15 im Bereich des Endes der Förderverrohrung 7 mit dem Außenrohr 16 verbunden. Hierzu ist am Ende des Außenrohrs 16 ein verdickter Rohrschuh 17, der auch als Tubingschuh bezeichnet werden kann, vorgesehen. Mit dem Rohrschuh 17 ist über ein Adapterstück 18 das Ende des Innenrohrs 17 fest verbunden. Im einzelnen weist das Adapterstück 18 zum einen ein mit dem letzten Innenrohrstück des Innenrohrs 15 verschweißtes Endstück 19 aus Kunststoff auf. Dieses Endstück 19 ist mit dem letzten Innenrohrstück der Innenverrohrung 15 über eine Stumpfverschweißung 20 fest verbunden. Weiterhin weist das Adapterstück 18 ein Schraubanschlussstück 21 auf, das einerseits ein Gewinde 22 zur Verschraubung mit dem Rohrschuh 17 und einen Eingriffsbereich 23 zum Eingriff in das Endstück 19 aufweist. Über den Eingriffsbereich 23 ergibt sich eine form- und/oder kraftschlüssige Verbindung zwischen dem Schraubanschlussstück 21 und dem Endstück 14. Im Übrigen versteht es sich, dass im Rohrschuh 17 ein zum Gewinde 22 korrespondierendes Innengewinde vorgesehen ist, um eine Verschraubung zu ermöglichen. Dabei ist zwischen den beiden Gewinden eine Dichtung, insbesondere ein Dichtband, vorgesehen.

In der Förderverrohrung 7 befindet sich oberhalb des Rohrschuhs 17 wenigstens eine und insbesondere eine Mehrzahl von Lastaufnahmeeinrichtungen 24. Bevorzugt befindet sich die erste Lastaufnahmeeinrichtung 24 in einem Abstand von etwa 200 bis 300 m oberhalb des Rohrschuhs 17. An die erste Lastaufnahmeeinrichtung 24 schließen sich weitere Lastaufnahmeeinrichtungen 24 an, wobei die Lastaufnahmeeinrichtungen 24 etwa in regelmäßigen Abständen zueinander vorgesehen sind. Die Lastaufnahmeeinrichtungen 24 dienen, wie auch die Verbindung des Innenrohrs 15 mit dem Außenrohr 16 im Bereich des Rohrschuhs 17 dazu, im Innenrohr 15 auftretende Kräfte, die sich aufgrund von Relativbewegungen des Innenrohrs 15 zum Außenrohr 16 ergeben, so abzufangen, dass sich letztlich keine Schädigung oder Beeinträchtigung des Innenrohrs 15 ergibt.

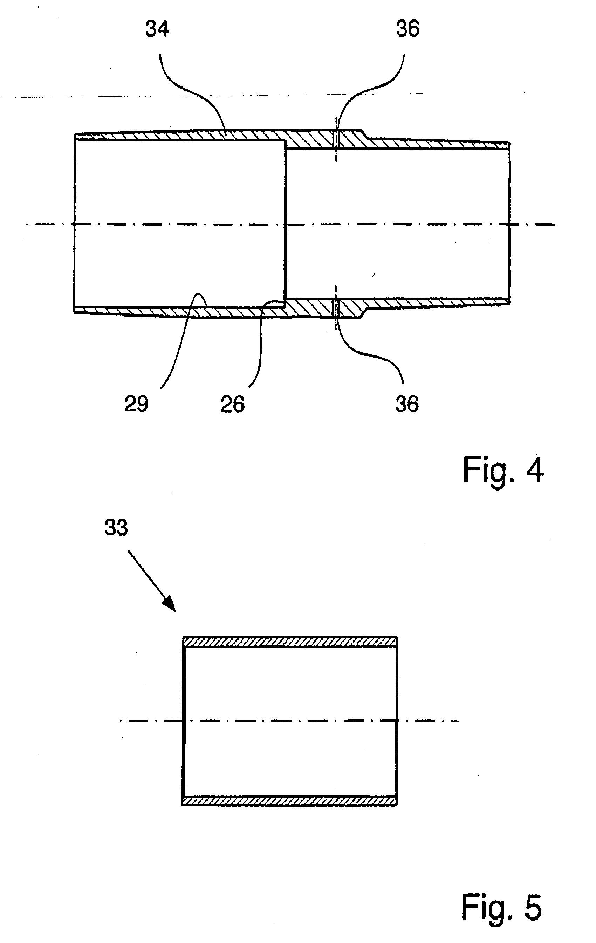

Die Lastaufnahmeeinrichtung 24 ist bei dem in Fig. 3 dargestellten Ausführungsbeispiel derart ausgebildet, dass sie einen mit benachbarten Außenrohrstücken verbindbaren Außenrohrverbinder 25 mit wenigstens einem innenliegenden Anschlag 26 aufweist. Des Weiteren ist ein mit benachbarten Innenrohrstücken verbindbarer bzw. wie im dargestellten Ausführungsbeispiel verbundener Innenrohrverbinder 27 vorgesehen, der wenigstens einen zum innenliegenden Anschlag 26 korrespondierenden äußeren Anschlag 28 aufweist. Wie sich insbesondere aus Fig. 4 ergibt, ist der innenliegende Anschlag 26 im Bereich einer Innennut 29 vorgesehen, während der außenliegende Anschlag 28 durch einen ringförmigen, umlaufenden Vorsprung 30 gebildet wird. Im dargestellten Ausführungsbeispiel ist es so, dass der umlaufende Vorsprung 30 an einem mit benachbarten Innenrohrstücken verbundenen, verdickten Absetzstück 31 vorgesehen ist. Das Absetzstück 31 weist also den verdickten Vorsprung 30 und im Übrigen oberseitig einen Ansatz 32 zur Verbindung mit dem benachbarten Innenrohrstück auf. Es sei darauf hingewiesen, dass es grundsätzlich auch möglich ist, auf den Ansatz 32 zu verzichten.

Die axiale Länge der Innennut 29 ist größer als die axiale Länge des Vorsprungs 30, was sich aus Fig. 3 ergibt. Dies hat einbautechnische Gründe. Um möglichst eine formschlüssige Verbindung in axialer Richtung zu gewährleiten, ist in dem vom Vorsprung 30 nicht ausgefüllten Bereich der Innennut 29 eine diesen Bereich im wesentlichen auffüllende Distanzhülse 33, die im einzelnen in Fig. 5 dargestellt ist, vorgesehen. Die Distanzhülse 33 entspricht vom Außendurchmesser her etwa dem Außendurchmesser des Vorsprungs 30 und vom Innendurchmesser her etwa dem Außendurchmesser des Innenrohrs 15.

Wie sich aus Fig. 3 ergibt, ist der Außenrohrverbinder 25 mehrteilig. Er weist vorliegend zwei miteinander verschraubbare Lastaufnahmesegmente 34 auf. Die Verschraubung der beiden Lastaufnahmesegmente 34 erfolgt durch eine Muffe 35. Hierdurch kann gewährleistet werden, dass die Lastaufnahmesegmente 34 baugleich ausgeführt sind. Grundsätzlich könnte auf die Muffe 25 auch verzichtet werden. In diesem Fall hätte das eine Lastaufnahmesegment 34 ein Außengewinde, während das andere Lastaufnahmesegment 34 eine korrespondierende Innenverschraubung aufweisen würde.

Im vorliegenden Fall wird die Innennut 29 gleichermaßen durch die beiden zusammengeschraubten Lastaufnahmesegmente 34 gebildet. Im geöffneten Zustand des Außenrohrverbinders 25 ist die Innennut 29 von außen her so zugänglich, dass sowohl die Distanzhülse 33 als auch der Vorsprung 30 eingesetzt werden können.

Im Übrigen ist, wie sich dies insbesondere aus den Fig. 3 und 4 ergibt, in jedem der Lastaufnahmesegmente 34, und zwar bevorzugt in einem verdickten Bereich zwischen dem Nutbereich und dem Anschlussbereich für das Außenrohr 16, eine Mehrzahl von Entlastungsbohrungen 36 vorgesehen. Über diese Bohrungen 36 kann ein Druckausgleich erfolgen.

Der Einbau der Förderverrohrung 7 erfolgt nach Erstellung der äußeren Bohrlochverrohrung 2 so, dass zunächst in den Rohrschuh 17 das Adapterstück 18 dichtend eingeschraubt wird. Mit den Endstück 19 des Adapterstücks 18 kann entweder ein Innenrohrstück oder aber ein Zwischenstück des Innenrohrs 15 über Stumpfschweißen verbunden werden, Anschließend wird der Rohrschuh 17 ggfs. über ergänzende Anschlussstücke mit dem ersten Außenrohrstück verschraubt, während das Endstück 19 oder aber ein entsprechend angepasstes Passstück mit dem ersten Innenrohrstück verschweißt wird. Dieses Element wird dann in das Bohrloch abgelassen und endseitig abgefangen. Die dann vorliegende Situation ist so, dass das verbaute Innenrohr 15 entweder bündig mit dem verbauten Außenrohr 16 abschließt oder aber etwas übersteht.

Anschließend wird ein neues Innenrohrstück in ein neues Außenrohrstück im horizontalen Zustand eingeschoben und so fixiert, dass sich am unteren Ende ein Überstand des Innenrohrstücks ergibt. Dieses (Komposit-)Rohrelement wird nun auf das schon im Bohrloch befindliche zuletzt eingebaute Rohrelement aufgesetzt. Zunächst werden dann die aus Kunststoff bestehenden Elemente des Innenrohrstücks verschweißt. Danach wird das Außenrohrstück abgesenkt und mit seinem Gegenstück kraftschlüssig verschraubt. Der nunmehr verlängerte Strang wird weiter in das Bohrloch herab gelassen. Dieser Einbau setzt sich solange fort, bis eine Lastaufnahmeeinrichtung 24 einzubauen ist. Hierzu wird zunächst mit dem zuletzt eingebauten Außenrohrstück ein Lastaufnahmesegment 34 verschraubt, vorliegend über eine Muffe 35. Dann wird in die Innennut 29, die letztlich einen Ringraum zwischen dem Innenrohr und dem Lastaufnahmesegment 34 darstellt, die Distanzhülse 33 eingesetzt. Die Distanzhülse 33 schließt dabei zumindest im wesentlichen mit dem Innenrohr nach oben hin ab. Anschließend wird das Absetzstück 31 mit dem verdickten Vorsprung 30 aufgesetzt und mit dem bereits verbauten Innenrohrstück verschweißt. Nach Fertigstellung dieser Verbindung wird das weitere Lastaufnahmesegment 34 aufgesetzt und über eine Muffe 35 mit dem unteren Lastaufnahmesegment 34 verschraubt. Nach Verschrauben der beiden Segmente 34 endet der Ansatz 32 etwa bündig mit dem oberen Ende des oberen Lastaufnahmesegments 34 oder aber steht geringfügig über dieses Ober. Dann wird der Einbau in der zuvor beschriebenen Art und Weise fortgesetzt.

### Bezugszeichenliste

- 1: Erdwärmesonde
- 2: äußere Bohrlochverrohrung
- 3: erster Bereich
- 4: zweiter Bereich
- 5: dritter Bereich
- 6: vierter Bereich
- 7: Förderverrohrung
- 8: Förderrohr
- 9: Ende
- 10: Bohrlochsohle
- 11: Sondenkopf
- 12: Warmförderleitung
- 13: Wärmetauscheinrichtung
- 14: Kaltförderleitung
- 15: Innenrohr
- 16: Außenrohr
- 17: Rohrschuh
- 18: Adapterstück
- 19: Endstück
- 20: Stumpfverschweißung
- 21: Schraubanschlussstück
- 22: Gewinde
- 23: Eingriffsbereich
- 24: Lastaufnahmeeinrichtung
- 25: Außenrohrverbinder
- 26: Anschlag
- 27: Innenrohrverbinder
- 28: Anschlag
- 29: Innennut
- 30: Vorsprung
- 31: Absetzstück
- 32: Ansatz
- 33: Distanzhülse
- 34: Lastaufnahmesegment
- 35: Muffe
- 36: Entlastungsbohrung

## Patentansprüche

1. Förderverrohrung (7) zur Verwendung bei einer Erdwärmesonde (1) zur Gewinnung geothermischer Energie,
**dadurch gekennzeichnet,**
**dass** als Förderverrohrung (7) eine Kompositverrohrung mit einem inneren Verrohrungsbereich aus einem wärmedämmenden Kunststoff, insbesondere Polypropylen oder einem Polypropylen enthaltenden Kunststoff, und einem äußeren Verrohrungsbereich aus Metall, insbesondere aus Stahl, vorgesehen ist.

2. Förderverrohrung nach Anspruch 1, **dadurch gekennzeichnet, dass** der innere Verrohrungsbereich als Innenrohr (15) und der äußere Verrohrungsbereich als vom Innenrohr (15) separates Außenrohr (16) ausgebildet ist.

3. Förderverrohrung nach Anspruch 1 oder 2, **dadurch gekennzeichnet, dass** das Innenrohr (15) eine Vielzahl von miteinander verbundenen Innenrohrstücken aufweist und dass das Außenrohr (16) eine Vielzahl von miteinander verschraubten Außenrohrstücken aufweist.

4. Förderverrohrung nach einem der vorhergehenden Ansprüche, **dadurch gekennzeichnet, dass** das Innenrohr (15) im Bereich des Endes (9) der Förderverrohrung (7) fest mit dem Außenrohr (16) verbunden ist.

5. Förderverrohrung nach einem der vorhergehenden Ansprüche, **dadurch gekennzeichnet, dass** am Ende des Außenrohrs (16) ein insbesondere verdickter Rohrschuh (17) vorgesehen ist, mit dem insbesondere über ein Adapterstück (18) das Ende des Innenrohrs (15) fest verbunden, insbesondere abdichtend verschraubt ist.

6. Förderverrohrung nach einem der vorhergehenden Ansprüche, **dadurch gekennzeichnet, dass** das Adapterstück (18) ein mit einem Innenrohrstück verbindbares Endstück (19) aus Kunststoff und ein Schraubanschlussstück (21) aufweist.

7. Förderverrohrung nach einem der vorhergehenden Ansprüche, **dadurch gekennzeichnet, dass** dass Schraubanschlussstück (21) ein Gewinde (22) zur Verschraubung mit dem Rohrschuh (17) und einen Eingriffsbereich (23) zum Eingriff in das Endstück (19) aufweist.

8. Förderverrohrung nach einem der vorhergehenden Ansprüche, **dadurch gekennzeichnet, dass** in einem Abstand von wenigstens 10 m oberhalb des Rohrschuhs (17) wenigstens eine zwischen dem Innenrohr (15) und dem Außenrohr (16) vorgesehene Lastaufnahmeeinrichtung (24) zur Ableitung von Kräften des Innenrohrs (15) in das Außenrohr (16) vorgesehen ist.

9. Förderverrohrung nach einem der vorhergehenden Ansprüche, **dadurch gekennzeichnet, dass** über die Länge der Förderverrohrung (7) eine Mehrzahl von in insbesondere regelmäßigen Abständen zwischen 100 bis 500 m beabstandeten Lastaufnahmeeinrichtungen (24) vorgesehen sind.

10. Förderverrohrung nach einem der vorhergehenden Ansprüche, **dadurch gekennzeichnet, dass** die Lastaufnahmeeinrichtung (24) einen mit benachbarten Außenrohrstücken verbindbaren Außenrohrverbinder (25) mit wenigstens einem innenliegenden Anschlag (26) und einen mit benachbarten Innenrohrstücken verbindbaren Innenrohrverbinder (27) mit wenigstens einem zum innenliegenden Anschlag (26) komplementären außenliegenden Anschlag (28) aufweist, dass vorzugsweise, der innenliegende Anschlag (26) im Bereich einer Innennut (29) des Außenrohrverbinders (25) vorgesehen ist, während der außenliegende Anschlag (28) durch einen ringförmigen, umlaufenden Vorsprung (30) gebildet ist und dass, weiter vorzugsweise, der umlaufende Vorsprung (30) an einem mit benachbarten Innenrohrstücken verbindbaren Absetzstück (31) vorgesehen ist.

11. Förderverrohrung nach einem der vorhergehenden Ansprüche, **dadurch gekennzeichnet, dass** die axiale Länge der Innennut (29) größer ist als die axiale Länge des Vorsprungs (30) und dass, vorzugsweise, in dem vom Vorsprung (30) nicht ausgefüllten Bereich der Innennut (29) eine den Bereich im wesentlichen ausfüllende Distanzhülse (33) vorgesehen ist.

12. Förderverrohrung nach einem der vorhergehenden Ansprüche, **dadurch gekennzeichnet, dass** der Außenrohrverbinder (25) wenigstens zwei miteinander verbindbare, insbesondere verschraubbare, Lastaufnahmesegmente (34) aufweist.

13. Förderverrohrung nach einem der vorhergehenden Ansprüche, **dadurch gekennzeichnet, dass** im Mantel des Außenrohrs (16), vorzugsweise im Bereich des Außenrohrverbinders (25), wenigstens eine Entlastungsbohrung (36) vorgesehen ist.

14. Verfahren zum Einbau einer Förderverrohrung (7) in eine äußere Bohrlochverrohrung (2) einer Verrohrung zur Verwendung bei einer Erdwärmesonde (1) zur Gewinnung geothermischer Energie, mit einem Innenrohr (15) aus einem wärmedämmenden Kunststoff und einem vom Innenrohr (15) separaten metallenen Außenrohr (16), wobei das Innenrohr (15) aus einer Mehrzahl von Innenrohrstücken und das Außenrohr (16) aus einer Mehrzahl von Außenrohrstücken hergestellt wird und wobei benachbarte Innenrohrstücke miteinander verschweißt und benachbarte Außenrohrstücke miteinander verschraubt werden.

15. Verfahren nach Anspruch 14, **dadurch gekennzeichnet, dass** das Außenrohr (16) und das Innenrohr (15) mit gleichem Baufortschritt montiert werden und dass, vorzugsweise, zur Montage ein Innenrohrstück in ein Außenrohrstück eingebracht wird, so dass sich ein Rohrstückelement ergibt, dass das Rohrstückelement auf das zuletzt verbaute Rohrstückelement vertikal aufgesetzt wird, dass anschließend zunächst das Innenrohrstück des aufgesetzten Rohrstückelements mit dem zuletzt verbauten Innenrohrstück verschweißt wird und dass dann das Außenrohrstück des aufgesetzten Rohrstückelements mit dem zuletzt verbauten Rohrstückelement verschraubt wird.

## Claims

1. Production piping (7) for use with a geothermal heat probe (1) for the extraction of geothermal energy,
**characterized in,**
**that** a composite piping is provided as production piping (7) having an inner piping area made of a heat-insulating plastic, particularly polypropylene or a polypropylene containing plastic, and an external piping area made from metal, particularly from steel.

2. Production piping according to claim 1, **characterized in that** the internal piping area is designed as an inner pipe (15) and the external piping area as an outer pipe (16) separate from the inner pipe (15).

3. Production piping according to claim 1 or 2, **characterized in that** the inner pipe (15) has a multiplicity of inner pipe sections connected with each other and that the outer pipe (16) has a multiplicity of outer pipe sections screwed together.

4. Production piping according to one of the preceding claims, **characterized in that** the inner pipe (15) in the area of the end (9) of the production piping (7) is firmly connected with the outer pipe (16).

5. Production piping according to one of the preceding claims, **characterized in that** at the end of the outer pipe (16) an especially thickened pipe shoe (17) is provided, with which the end of the inner pipe (15) in particular is firmly connected via an adapter piece (18), in particular is screwed down in a sealing manner.

6. Production piping according to one of the preceding claims, **characterized in that** the adapter piece (18) has an end piece (19) made of plastic connectable with an inner pipe section and a screw connector (21).

7. Production piping according to one of the preceding claims, **characterized in that** the screw connector (21) has a screw thread (22) for the screw connection with the pipe shoe (17) and an area of engagement (23) for engagement with the end piece (19).

8. Production piping according to one of the preceding claims, **characterized in that** at a distance of at least 10 m above the pipe shoe (17) at least one load lifting accessory (24) provided between the inner pipe (15) and the outer pipe (16) is provided for discharging the forces of the inner pipe (15) into the outer pipe (16).

9. Production piping according to one of the preceding claims, **characterized in that** a multiplicity of load lifting accessories (24) is provided spaced at particular regular distances between 100 and 500 m.

10. Production piping according to one of the preceding claims, **characterized in that** the load lifting accessory (24) has an outer pipe connector (25) connectable with adjoining outer pipe sections having at least one internal arrester (26) and an inner pipe connector (27) connectable with adjoining inner pipe sections having at least one external arrester (28) complementary to the internal arrester (26), that preferably, the internal arrester (26) is provided in the area of an inner groove (29) of the outer pipe connector (25), while the external arrester (28) is formed by a ring-shaped, circumferential nose (30) and that, further preferably, the circumferential nose (30) is provided on an offset (31) connectable with adjoining inner pipe sections.

11. Production piping according to one of the preceding claims, **characterized in that** the axial length of the inner groove (29) is larger than the axial length of the nose (30) and that, preferably, in the area of the inner groove (29) not filled by the nose (30) a distance sleeve (33) is provided substantially filling the area.

12. Production piping according to one of the preceding claims, **characterized in that** the outer pipe connector (25) has at least two load lifting accessories (34) which can be connected, in particular, can be screwed together with each other.

13. Production piping according to one of the preceding claims, **characterized in that** in the casing of the outer pipe (16), preferably in the area of the outer pipe connector (25) at least one relief hole (36) is provided.

14. A method for installation of a production piping (7) into an outer drill-hole piping (2) of a piping for use in a geothermal heat probe (1) for the extraction of geothermal energy, having an inner pipe (15) made of a heat-insulating plastic and a metallic outer pipe (16) separate from the inner pipe (15), wherein the inner pipe (15) is produced from a multiplicity of inner pipe sections and the outer pipe (16) from a multiplicity of outer pipe sections and wherein the adjoining inner pipe sections are welded together and the adjoining outer pipe sections are screwed together.

15. A method according to claim 14, **characterized in that** the outer pipe (16) and the inner pipe (15) are mounted with the same construction progress and that, preferably, for the installation an inner pipe section is introduced into an outer pipe section, so that a pipe section element results, that the pipe section element is attached vertically to the last installed pipe section element, that subsequently initially the inner pipe section of the attached pipe section element is welded with the last installed inner pipe section and that then the outer pipe section of the attached pipe section element is screwed together with the last installed pipe section element.

## Revendications

1. Canalisation de transport (7) destinée à l'utilisation dans une sonde géothermique (1) pour la production d'énergie géothermique,
**caractérisée**
**en ce qu'**il est prévu comme canalisation de transport (7) une canalisation composite comprenant une zone de canalisation intérieure réalisée dans une matière plastique isolante thermiquement, en particulier en polypropylène ou dans une matière plastique contenant du polypropylène, et une zone de canalisation extérieure réalisée en métal, en particulier en acier.

2. Canalisation de transport selon la revendication 1, **caractérisée en ce que** la zone de canalisation intérieure est réalisée comme une conduite interne (15) et la zone de canalisation extérieure comme une conduite externe (16) distincte de la conduite interne (15).

3. Canalisation de transport selon la revendication 1 ou 2, **caractérisée en ce que** la conduite interne (15) présente une pluralité de pièces de conduite interne reliées les unes avec les autres et **en ce que** la conduite externe (16) présente une pluralité de pièces de conduite externe vissées les unes avec les autres.

4. Canalisation de transport selon l'une des revendications précédentes, **caractérisée en ce que** la conduite interne (15) est reliée de façon fixe avec la conduite externe (16) dans la zone de l'extrémité (9) de la canalisation de transport (7).

5. Canalisation de transport selon l'une des revendications précédentes, **caractérisée en ce qu'**il est prévu à l'extrémité de la conduite externe (16), un sabot de conduite (17), en particulier épaissi, avec lequel l'extrémité de la conduite externe (15) est reliée de façon fixe, en particulier vissée de façon étanche, en particulier par le biais d'un élément adaptateur (18).

6. Canalisation de transport selon l'une des revendications précédentes, **caractérisée en ce que** l'élément adaptateur (18) présente une pièce d'extrémité (19) en matière plastique pouvant être reliée avec une pièce de la conduite interne et une pièce de raccord à vis (21).

7. Canalisation de transport selon l'une des revendications précédentes, **caractérisée en ce que** la pièce de raccord à vis (21) présente un filetage (22) destiné au vissage avec le sabot de conduite (17) et une zone d'engrènement (23) destinée à la réalisation d'un engrènement dans la pièce d'extrémité (19).

8. Canalisation de transport selon l'une des revendications précédentes, **caractérisée en ce qu'**à une distance d'au moins 10 cm au-dessus du sabot de conduite (17), il est prévu au moins un dispositif de prise de charge (24) agencé entre la conduite interne (15) et la conduite externe (16) destiné à dévier les charges de la conduite interne (15) vers la conduite externe (16).

9. Canalisation de transport selon l'une des revendications précédentes, **caractérisée en ce qu'**une pluralité de dispositifs de prise de charge (24) espacés en particulier à des distances régulières comprises entre 100 et 500 m sont prévus sur la longueur de la canalisation de transport (7).

10. Canalisation de transport selon l'une des revendications précédentes, **caractérisée en ce que** le dispositif de prise de charge (24) présente un connecteur de conduite externe (25) pouvant être relié avec des pièces de conduite externe adjacentes, comprenant au moins une butée (26) située à l'intérieur, et un connecteur de conduite interne (27) pouvant être relié avec des pièces de conduite interne adjacentes, comprenant au moins une butée (28) située à l'extérieur complémentaire à la butée (26) située à l'intérieur, **en ce que** de préférence, la butée (26) située à l'intérieur est prévue dans la zone d'une rainure interne (29) du connecteur de conduite externe (25) tandis que la butée (28) située à l'extérieur est formée par une saillie périphérique de forme annulaire (30), et **en ce que** de façon encore plus préférée, la saillie périphérique (30) est prévue sur une pièce de tassage (31) pouvant être reliée avec des pièces de conduite interne adjacentes.

11. Canalisation de transport selon l'une des revendications précédentes, **caractérisée en ce que** la longueur axiale de la rainure interne (29) est supérieure à la longueur axiale de la saillie (30) et **en ce que** de préférence, il est prévu dans la zone de la rainure interne (29) qui n'est pas remplie par la saillie (30), une douille d'entretoisement (33) remplissant essentiellement cette zone.

12. Canalisation de transport selon l'une des revendications précédentes, **caractérisée en ce que** le connecteur de conduite externe (25) présente au moins deux segments de prise de charge (34) pouvant être reliés, en particulier vissés, l'un avec l'autre.

13. Canalisation de transport selon l'une des revendications précédentes, **caractérisée en ce qu'**il est prévu au moins un perçage de décharge (36) dans la gaine de la conduite externe (16), de préférence dans la zone du connecteur de conduite externe (25).

14. Procédé de pose d'une canalisation de transport (7) dans une canalisation de forage extérieure (2) d'une canalisation destinée à l'utilisation dans une sonde géothermique (1) pour la production d'énergie géothermique, comprenant une conduite interne (15) réalisée dans une matière plastique isolante thermiquement et une conduite externe métallique (16) séparée de la conduite interne (15), étant entendu que la conduite interne (15) est fabriquée à partir d'une pluralité de pièces de conduite interne et la conduite externe (16) est fabriquée à partir d'une pluralité de pièces de conduite externe et étant entendu que les pièces de conduite interne adjacentes sont soudées les unes avec les autres et les pièces de conduite externe adjacentes sont vissées les unes avec les autres.

15. Procédé selon la revendication 14, **caractérisé en ce que** la conduite externe (16) et la conduite interne (15) sont montées avec un avancement identique de la construction et **en ce que** de préférence, aux fins du montage, une pièce de conduite interne est insérée dans une pièce de conduite externe de manière à obtenir un élément de pièce de conduite, **en ce que** l'élément de pièce de conduite est posé verticalement sur l'élément de pièce de conduite assemblé en dernier lieu, **en ce qu'**ensuite, la pièce de conduite interne de l'élément de pièce de conduite posé est d'abord soudée avec la pièce de conduite interne assemblée en dernier lieu, et **en ce qu'**enfin, la pièce de conduite externe de l'élément de pièce de conduite posé est vissé avec l'élément de pièce de conduite assemblé en dernier lieu.
